# EUROPEAN PATENT APPLICATION

(11) **EP 4 289 873 A1**
(43) Date of publication of application: **13.12.2023**
(21) Application number: 23178545.2
(22) Date of filing: 09.06.2023
(51) Int. Cl.: C08F 20/60, C08F 265/10

(54) **HIGH MOLECULAR WEIGHT POLYMERIC DISPERSIONS MANUFACTURED UNDER CONTROLLED ADIABATIC CONDITIONS**

(30) Priority: 10.06.2022 DE 102022114638; 10.06.2022 DE 102022114641; 10.06.2022 DE 102022114640; 10.06.2022 DE 102022114642; 10.06.2022 DE 102022114644
(71) Applicant: Solenis Technologies Cayman, L.P., Wilmington, DE 19803 (US)
(72) Inventor: Bruzzano, Dr. Nathalie, Wilmington, DE, 19803 (US); Boekelo, Christian, Wilmington, DE, 19803 (US); Bröcher, Dr. Markus, Wilmington, DE, 19803 (US)
(74) Representative: LKGlobal UK Ltd.

(57) **Abstract**

The invention relates to methods for manufacturing a polymer dispersion, to polymer dispersions and their use. The methods of manufacturing the polymer dispersion comprise the steps of providing a reaction mixture in an aqueous medium comprising a polymeric dispersant and a monomer composition comprising radically polymerizable monomers, and subjecting the monomer composition in the reaction mixture to a radical polymerization to synthesize a dispersed polymer so as to form the polymer dispersion, wherein step of subjecting the monomer composition is performed under controlled adiabatic conditions. These polymer dispersions are designated as water-in-water (w/w) polymer dispersions.

## Description

The invention relates to methods for manufacturing a polymer dispersion, to polymer dispersions and their use. The methods of manufacturing the polymer dispersion comprise the steps of providing a reaction mixture in an aqueous medium comprising a polymeric dispersant and a monomer composition comprising radically polymerizable monomers, and subjecting the monomer composition in the reaction mixture to a radical polymerization to synthesize a dispersed polymer so as to form the polymer dispersion, wherein step of subjecting the monomer composition is performed under controlled adiabatic conditions. These polymer dispersions are designated as water-in-water (w/w) polymer dispersions.

The foremost objective is to unlock the potential of water and renewable resources to find safer, healthier, more sustainable solutions. Numberless industrial processes are water-based processes. The replacement of environmental harmful substances or their volume reduction in water-based processes form the basis towards more sustainable solutions. The invention aims at this foremost objective in the field of water-in-water polymer dispersions (w/w polymer dispersions). The improvements of w/w polymer dispersions directly correlate with the sustainability in downstream applications, as e.g. in the paper making process. The better such w/w polymer dispersion work as additives in water-based processes, like in the paper making process, the less of such process additives are to be used. Furthermore, the substitution of hydrocarbons supports the foremost objective.

The water-in-water polymer dispersions are useful as flocculants, dewatering (drainage) aids and retention aids in papermaking besides applications in other technical fields. Paper is manufactured by firstly making an aqueous slurry of cellulosic fibers which slurry has a water content of more than 95 wt-%. The final paper sheet has a water content of less than 5 wt-%. The dewatering (drainage) and retention represent crucial steps in papermaking and are important for an efficient paper making process. High-performance w/w polymer dispersions represent a key factor in the paper making process.

A well-known flocculant is given by a w/w polymer dispersion, which is produced by copolymerizing ethylenically unsaturated monomers in an aqueous system comprising a polymeric dispersant resulting in a dispersion comprising the polymeric dispersant and the synthesized copolymer. The US8476391 B2 and US732351 0B2 represent early publications of such w/w polymer dispersions. It is well-accepted knowledge in this technical field that the addition of separately synthesized copolymers on the one hand and polymer dispersants on the other hand results in a products having completely different properties compared to the w/w polymer dispersions as disclosed in the above patent documents. It requires the copolymerization within a system comprising the polymeric dispersant in order to obtain high-performance flocculant products e.g. for the paper making process.

These circumstances make the manufacturing of the w/w polymer dispersions to a multi-parameter system. The kind of the ethylenically unsaturated monomer, their ratio, the kind of the polymer dispersant are only a very few parameters influencing the properties of the w/w polymer dispersion. An improvement of the properties of the final product of the w/w polymer dispersion has been subject of numberless attempts in research and development.

The skilled person knows how to radically polymerize monomers in a reaction mixture. The skilled person principally knows how to modify the amount and type of the initiator in order to modify the properties of the resultant polymer product, in particular in terms of molecular weight and molecular weight distribution of the synthesized polymer.

However, there is still the need for finding those parameters having a beneficial impact on complex polymer systems and offering the possibility to improve their properties. As such, there is still the need for improving the long-term stability and ensuring a long shelf-life under unfavorable circumstances like e. g. alternating temperatures. Further, there is still a need for improving the handling of the w/w polymer dispersion. In particular, the w/w polymer dispersions must show a tailor-made viscosity for an improved handling for downstream applications. Even further, it is a very important object to find more energy efficient processes.

Apart from the properties of the final product of the w/w polymer dispersion, there is also the need for improving the process as such. In this regard, it is desirable to reduce the duration of the process for obtaining the final product of the w/w polymer dispersion. A shortening of the time of the process enlarges the quantity of product over time as an increased number of batches can be accomplished. Such a reduction of time for producing the final product should, however, not be associated with a loss of quality of the final product. In particular, the reduction of time should not be associated a deteriorated viscosity, i.e. a deteriorated handling.

The invention's underlaying problem relates to overcome the drawbacks of the state of the art. In particular, the invention's underlaying problem relates to the provision of a process for manufacturing a w/w polymer dispersion resulting in a product ensuring an improved handling. Further, the invention's underlaying problem relates to the provision of a process for manufacturing a w/w polymer dispersion ensuring a high degree of stability during the manufacturing process and ensuring a high shelf-life under unfavorable circumstances like e. g. alternating temperatures. Even further, the invention's underlaying problem relates to the provision of a process for manufacturing a w/w polymer dispersion, wherein the time for completing the process is reduced without a loss of quality of the w/w polymer dispersion.

The invention's underlaying problems are solved by the subject-matter of claim 1. Thus, according to a first aspect, the invention relates a Method for manufacturing a polymer dispersion comprising the steps of A) providing a reaction mixture in an aqueous medium comprising a) a polymeric dispersant and b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer; and B) subjecting the monomer composition to a radical polymerization to synthesize a dispersed polymer and to form the polymer dispersion, wherein step B) is performed under controlled adiabatic conditions.

The method comprises the provision of a reaction mixture comprising the monomers to be copolymerized and a polymeric dispersant. The monomers are polymerized in presence of the polymeric dispersant in an aqueous medium. According to well-established technical knowledge, a polymer dispersion obtained by the method according to the invention cannot be obtained in that the monomer composition is subjected to a copolymerization, whereupon subsequently after the copolymerization, the polymeric dispersant is added. Unique properties are conferred to the polymer dispersion by applying the method according to the invention, which polymer dispersion represents the final product comprising the copolymer obtained from the radically polymerizable monomers together with the polymeric dispersant.

According to the usual practice in the state of the art, polymerizations and in particular polymerizations to obtain w/w polymer dispersions make use of isothermal processes. In most cases, isothermal conditions are attained such that heat is transferred from outside the reaction vessel to the reaction mixture, such that a specific temperature above room temperature is adjusted and essentially kept at that temperature.

It was surprisingly found that conducting the process under controlled adiabatic conditions results in overcoming the invention's underlaying problems. The term "adiabatic conditions" is understood in line with the understanding of a skilled person. Conducting the method under adiabatic conditions means that the energy consumption is reduced. Therefore, the method is a more sustainable solution.

It is essential for the present invention that the process is conducted under "controlled" adiabatic conditions. In the framework of the present application, this term is understood such that measures are applied having an impact on heat management. Process measures are applied such that the reaction proceeds in a way that heat increases more or less slow or faster.

In a preferred embodiment of the invention, the catalyst is used such that the reaction accomplishes in the desired way. Therefore, according to a preferred embodiment, the method is characterized in that step B) is performed under controlled adiabatic conditions by sequentially or simultaneously adding a redox initiator system. Preferably the redox initiator system comprises an oxidizing agent and a reducing agent.

The method step of adding the initiator system means that control of the reaction is taken over. In other words, the addition of the initiator system is tailor made for the purpose of controlling the reaction.

Controlling the adiabatic conditions means also that the evolution of heat is determined depending on the redox initiator system.

Typically, polymerization reactions are carried out in the presence of one or more polymerization initiators. Radicals may be formed upon thermally induced or photochemically induced homolysis of single bonds or redox reactions. In the following, the term "initiator" shall comprise all compounds as well as combinations of compounds which are capable of generating radicals by thermal and/or photochemical induction and/or by redox reactions.

According to preferred embodiments, the kind of initiator system controls the method of manufacturing the w/w polymer dispersion. In a first preferred embodiment, the method is characterized in that step B) is performed under controlled adiabatic conditions by sequentially or simultaneously adding a redox initiator system. The redox initiator system preferably comprises an oxidizing agent and a reducing agent.

According to a preferred embodiment, the method is characterized in that the oxidizing agent has a redox potential of from 0.6 to 2.0 V. Preferred oxidizing agents being used in the redox initiator system for controlling the adiabatic conditions are peroxydiphosphates; hydrogen peroxide (1.14 V); alkyl hydroperoxides, more preferred t-butyl hydroperoxide; or aryl hydroperoxides, more preferred cumene hydroperoxide. According to a most preferred embodiment, the method is characterized in that the oxidizing agent is selected from alkyl hydroperoxides, in particular t-butyl hydroperoxide, or aryl hydroperoxides, in particular cumene hydroperoxide.

Persulfates as agents in an initiator system may also be used. However, it has been found that persulfates with a redox potential of 2.01 V does not have such an impact on the method of manufacturing that it is able to fulfill the feature according to which the method is conducted under controlled adiabatic conditions. If persulfates are used as initiators in the present method, there is used a further oxidizing agent in the redox initiator system having a potential of 2 V or less and 0.6 V or more. However, in a preferred embodiment, the redox initiator system is devoid of a persulfate salt.

In a preferred embodiment, the method is characterized in that the reducing agent has a redox potential of from -2 to 0.3 V. Preferred reducing agents are selected from sodium bisulfite, potassium bisulfite, ammonium bisulfite, sodium sulfite (-1.12 V), potassium sulfite, ammonium sulfite, a hydrogen sulfite (-0.08 V); a thiosulfate (-.017 V); an amine; an acid, more preferred ascorbic acid (0.127 V) or erythorbic acid (0.127 V). More preferred reducing agents are bisulfites, in particular sodium bisulfite, potassium bisulfite, or ammonium bisulfite.

The redox potential is determined according to standard methods known by a skilled person.

In a most preferred embodiment, the redox initiator system comprises an alkyl/aryl hydroperoxide together with a bisulfite.

In a preferred embodiment, more oxidizing agent is used than reducing agent in terms of mass. According to a preferred embodiment, the method is characterized in that the weight ratio between the reducing agent and the oxidizing agent is below 35 :1 and above 2 :1, preferably below 15 :1 and above 3:1, more preferred below 9 : 1 and above 4:1.

The controlled adiabatic condition feature and the preferred features related to the controlled adiabatic condition feature are associated with an improvement of the method for manufacturing the w/w polymer dispersion as such. Said features improve the method according to the invention in that the time for the copolymerization (step B) is shorter. In a preferred embodiment, step B is performed within a time frame of less than 40 min. The time frame starts from the addition of a first portion of an initiator and ends with reaching the maximum temperature (Tmax). According to a preferred embodiment, at Tmax the next step is performed, i.e. the step of reducing the residual monomer content.

The method can be conducted by use of additional initiators. As for additional initiators, the following can be used beside the redox initiator system:
(i) water soluble and water insoluble azo-compounds such as 2,2'-azobis(2-amidinopropane) dihydrochloride (Vazo 56 or V-50), 2,2'-azobis(4-methoxy-2,4-dimethylvaleronitrile) (Vazo 33), 2,2'-azobis(2,4-dimethylvaleronitrile) (Vazo 52), 2,2'-azobis(isobutyronitrile) (Vazo 64), 2,2'-azobis-2-methylbutyronitrile (Vazo 67), 1,1-azobis(1-cyclohexanecarbonitrile) (Vazo 88), 2,2'-azobis[2-(2-imidazolin-2-yl) propane] dihydrochloride (VA-044), 2,2'-azobis(2-cyclopropylpropionitrile) and 2,2'-azobis(methylisobutyrate) (V-601), 2,2'-azobis[2-(2-imidazolin-2-yl)propane] (VA-61), 2,2'-azobis{2-[1-(2-hydroxyethyl)-2-imidazolin-2-yl]propane}dihydrochloride (V-60), and 2,2'-azobis[2-methyl-N-(2-hydroxyethyl)propionamide] (VA-086) (which may be obtained from DuPont or Wako Pure Chemical Industries Ltd.); 2,2'-azobis(methyl isobutyrate), 4,4'-azobis-(4-cyanopentanoic acid), dimethyl 2,2'-azobisisobutyrate, 2,2'-azobis(isobutyramide) dihydrate, 2-phenylazo-2,4-dimethyl-4-methoxyvaleronitrile, 2-(carbamoylazo)isobutyronitrile, 2,2'-azobis(2,4,4-trimethylpentane), 2,2'-azobis(2-methylpropane), 2,2'-azobis(N,N'-dimethyleneisobutyramidine) in form of the free base or hydrochloride, 2,2'-azobis{2-methyl-N-[1,1-bis(hydroxymethyl)ethyl]propionamide}, and 2,2'-azobis{2-methyl-N-[1,1-bis(hydroxymethyl)-2-hydroxyethyl]propionamide; whereupon is particularly preferred; and
(ii) water soluble and water insoluble organic peroxides, such as t-butyl hydroperoxide, dit-butyl peroxide, t-butylperoxy pivalate, t-butyl peroxy isopropyl carbonate, benzoyl peroxide, dibenzoyl peroxide, 2,4-dichlorobenzoyl peroxide, benzoyl hydroperoxide, 2,5-dimethylhexyne-2,5-di-t-butylperoxide, 2,5-dimethylhexane-2,5-di-t-butylperoxide, di-tert-amyl peroxide, dicumyl peroxide, cumene hydroperoxide, isopropylbenzene peroxide, acetyl peroxide, diacetyl peroxide, t-butyl peracetate, isopropyl peroxycarbonate, diisopropyl peroxydicarbonate, lauroyl peroxide, dilauryl peroxide, decanoyl peroxide, diisononanoyl peroxide, didecanoyl peroxide, dioctanoyl peroxide, dicetyl peroxydicarbonate, di(4-t-butylcyclohexyl)peroxy dicarbonate (Perkadox 16S available from Akzo Nobel), di(2-ethylhexyl)peroxy dicarbonate, t-butylperoxy pivalate (Lupersol 11 available from Elf Atochem), t-butylperoxy-2-ethylhexanoate (Trigonox 21-C50 available from Akzo Nobel), acetyl cyclohexane sulphonyl peroxide, t-amyl perneodecanoate, t-butyl perneodecanoate, t-butyl perpivalate, t-amylperpivalate, bis(2,4-dichlorobenzoyl)peroxide, bis-(4-chlorobenzoyl)-peroxide, bis(2-methylbenzoyl)peroxide, disuccinic acid peroxide, t-butyl perisobutyrate, t-butyl permaleinate, 1,1-bis(t-butylperoxy)3,5,5-trimethylcyclohexane, 1,1-bis(t-butylperoxy)cyclohexane, t-butyl perisononaoate, 2,5-dimethylhexane 2,5-dibenzoate, t-amyl perbenzoate, t-butyl perbenzoate, 2,2-bis(t-butylperoxy)butane, 2,2 bis(t-butylperoxy)propane, 3-t-butylperoxy 3-phenylphthalide, α,α'-bis(t-butylperoxy isopropyl)benzene, 3,5-bis(t-butylperoxy)3,5-dimethyl 1,2-dioxolane, 3,3,6,6,9,9-hexamethyl 1,2,4,5-tetraoxa cyclononane, p-menthane hydroperoxide, pinane hydroperoxide, and diisopropylbenzene mono-a-hydroperoxide;

In a further preferred embodiment, the method is characterized in that step B is performed by agitating while measuring torque of a motor-driven agitator. Alternatively, the method is characterized in that step B is performed by agitating and torque of a motor-driven agitator is kept below 65 N/cm. If torque is 65 N/cm or higher, a gelling is observed resulting in a final product which does not provide the required properties as a flocculant.

In a preferred method, the monomer composition comprising the radically polymerizable monomers which are selected from the group consisting of one or more of the following:
i. a non-ionic monomer of formula (I) 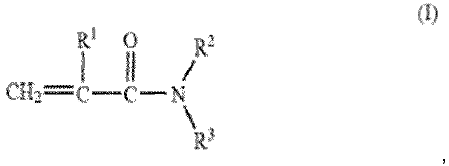 where
   R¹ means hydrogen or methyl;
   R² and R³ are, independently of each other, hydrogen, C₁-C₅-alkyl or C₁-C₅-hydroxyalkyl,
ii. a cationic monomer of formula (II) 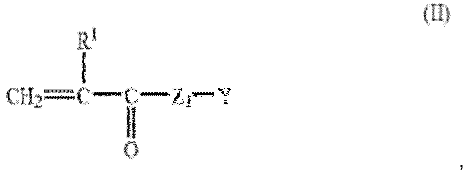 where
   R¹ means hydrogen or methyl;
   Z₁ is O, NH or NR₄, wherein R₄ means C₁-C₄-alkyl, preferably methyl, and
   Y is one of 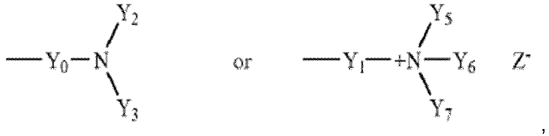 where
   Y₀ and Y₁ are a C₁-C₆ alkylene group, optionally substituted with one or more hydroxy groups, preferably ethylene or propylene, optionally substituted with one hydroxy group;
   Y2, Y3, Y5, Y6, Y7 independently of each other, are each C₁-C₆-alkyl, preferably methyl; and
   Z⁻ is a counterion, preferably a halogen, pseudo-halogen, acetate,
   or SO₄CH₃-;
iii. an amphiphilic monomer of formulae (III) or (IV) 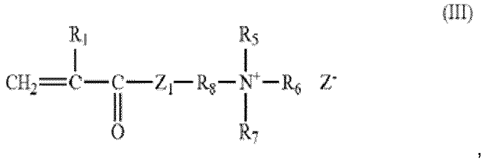 where
   Z₁ is O, NH, NR₄, wherein R₄ means C₁-C₄-alkyl, preferably methyl,
   R₁ means hydrogen or methyl,
   R₈ is a C₁-C₆ alkylene group, preferably ethylene or propylene,
   R₅ and R₆ are, independently of each other, each C₁-C₆-alkyl, preferably methyl,
   R₇ is a C₈-C₃₂ alkyl, optionally substituted with one or more hydroxy groups, preferably C₁₂-C₂₀ alkyl, optionally substituted with one hydroxy group, and
   Z⁻ is a counterion, preferably a halogen, pseudo-halogen, acetate,
   or SO₄CH₃-; or 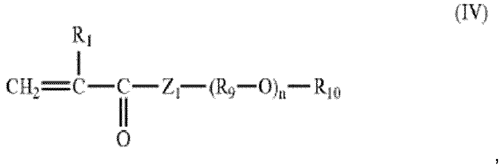 where
   Z₁ is O, NH, NR₄, wherein R₄ means C₁-C₄-alkyl, preferably methyl,
   R₁ means hydrogen or methyl,
   R₁₀ means hydrogen, C₈-C₃₂ alkyl, C₈-C₃₂ aryl and/or C₈-C₃₂ aralkyl, preferably C₁₂-C₂₀ alkyl,
   R₉ is a C₁-C₆ alkylene group, preferably an ethylene group or propylene group, and
   n is an integer between 1 and 50, preferably between 2 and 30, more preferred 3 and 15, most preferred 4 and 8;
      and
iv. an ethylenically unsaturated cross-linker containing 2, 3, 4 or 5 ethylenically unsaturated groups.

In the framework of the present invention, a cationic monomer is a monomer carrying permanently a positive charge.

According to the preferred embodiment, one or more of the above monomers given under items i. to iv. are used as monomers in the monomer composition to be polymerized. It is preferred that a copolymer is polymerized, i.e. that two of the above monomers given under items i. to iv. are provided for the monomer composition to be polymerized. It is preferred that one monomer of item i. and one monomer of item ii. are provided for the monomer composition subjected to the copolymerization. In a preferred embodiment, the radically polymerizable monomers comprise a radically polymerizable non-ionic monomer according to general formula (I); and a radically polymerizable cationic monomer according to general formula (II). These monomers being copolymerized are beneficial for solving the above problems.

Even further, it is preferred that one monomer of item i. one monomer of item ii. and one monomer of item iv. are provided for the monomer composition subjected to the copolymerization.

In a preferred embodiment, the method is characterized in that the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen.

In a preferred embodiment, the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide.

In another preferred embodiment, the radically polymerizable monomers comprise a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides. In a most preferred embodiment, the monomer composition comprises a radically polymerizable monomer being (meth)acrylamide together with a radically polymerizable monomer selected from trimethylammonium-C2-C6-alkyl(meth)acrylate halides, in particular being an acryloyl oxyethyl trimethylammonium halide.

According to a preferred embodiment, the monomer composition comprising radically polymerizable monomers comprises a cross-linker. Cross-linkers are known to the skilled person. In this preferred embodiment, the monomer composition preferably contains 0.0001 to 1.25 wt.-% of one or more preferably ethylenically unsaturated cross-linkers, based on the total weight of monomers. If ethylenically unsaturated cross-linkers are present, they contain 2, 3, 4 or 5 ethylenically unsaturated groups that are radically polymerizable.

Examples of cross-linkers with two radically polymerizable ethylenically unsaturated groups include:
(1) Alkenyl di(meth)acrylates, such as 1 ,6-hexanediol di(meth)acrylate, 1,10-decanediol di(meth)acrylate, 1,12-dodecanediol di(meth)acrylate, 1,18-octadecanediol di(meth)acrylate, neopentyl glycol di(meth)acrylate, methylene di(meth)acrylate, 2,2'-bis(hydroxymethyl)-1,3-propanediol di(meth)acrylate, and preferably, ethylene glycol di(meth)acrylate, 1.3-propane-diol di(meth)acrylate, 1,3-butanediol di(meth)acrylate, and 1,4-butanediol di(meth)acrylate;
(2) Alkylene di(meth)acrylamides, e.g. N-methylene di(meth)acrylamide, N,N'-3-methyl-butylidene bis(meth)acrylamide, N,N'-(1,2-dihydroxyethylene) bis(meth)acrylamide, and preferably N,N'-hexamethylene bis(meth)acrylamide, and particularly preferably N,N'-methylene bis(meth)acrylamide;
(3) Polyalkoxydi(meth)acrylates according to general formula (V) 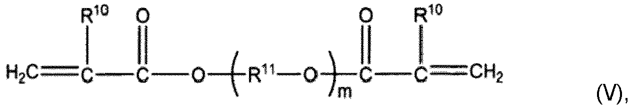 where
   R¹⁰ is hydrogen or methyl;
   R¹¹ is selected from -CH₂CH₂-, -CH₂CH₂CH₂-, -CH₂CH₂CH₂CH₂-, -CH₂CH₂CH₂CH₂CH₂- or -CH₂CH₂CH₂CH₂CH₂CH₂-; and
   m is an integer in the range 2-50.
   Examples of cross-linkers according to general formula (V) include polypropylene glycol di(meth)acrylates with m in the range 4-25; polybutylene glycol di(meth)acrylates with m in the range 5-40; and, preferably, polyethylene glycol di(meth)acrylates with m in the range 2-45, e.g. diethylene glycol di(meth)acrylate, triethylene glycol di(meth)acrylate, tetraethylene glycol di(meth)acrylate; and, more preferably, polyethylene glycol di(meth)acrylates with m in the range 5-20;
(4) Examples of additional di(meth)acrylates which may be used include benzylidene di-(meth)-acrylate, bisphenol-A di(meth)acrylate, 1,3-di(meth)acryloyloxy-Z-propanol, hydro-quinone di(meth)acrylate, ethanedithiol di(meth)acrylate, propanedithiol di(meth)acrylate, polyethylene dithiol di(meth)acrylate, and polypropylene dithiol di(meth)acrylate;
(5) Divinyl compounds, for example, 1,4-butanediol divinyl ether, divinylbenzene, butadiene, 1,6-hexadiene; di(meth)allyl compounds, such as, for example, di(meth)allyl phthalate or di(meth)allyl succinate; vinyl (meth)acrylic compounds, for example, vinyl (meth)acrylate; or preferably (meth)allyl (meth)acrylic compounds, for example, allyl (meth)acrylate.

Examples of cross-linkers having 3 or more ethylenically unsaturated radically polymerizable groups include glycerin tri(meth)acrylate, 2,2-dihydroxymethyl-1-butanol tri(meth)acrylate, trimethylolpropane triethoxy tri(meth)acrylate, trimethacrylamide, (meth)allylidene di(meth)-acrylate, 3-allyloxy-1,2-propanediol di(meth)acrylate, triallyl amine, triallyl cyanurate or triallyl isocyanurate; and also (as representative compounds with more than 3 ethylenically unsaturated radically polymerizable groups) pentaerythritol tetra(meth)acrylate and N,N,N'N'-tetra(meth)acryloyl-1 ,5-pentanediamine.

An example of a cross-linker having 5 ethylenically unsaturated radically polymerizable groups is dipentaerithritol-pentaacrylate.

Particularly preferred cross-linkers are selected from the group constsiting of methylene bisacrylamide, polyethylene glycol diacrylate, triallylamine, and tetraallyl ammonium chloride.

Further preferred cross-linkers include asymmetrically cross-linkable monomers, i.e. cross-linkable monomers which rely on different functional groups with respect to the incorporation reaction into the polymer backbone and the cross-linking reaction. Examples of such asymmetrically cross-linkable monomers include N'-methylol acrylamide, N'-methylol methacrylamide and glycidyl(meth)acrylate.

Cross-linkers of this type have the advantage that cross-linking may be initiated subsequently. Thus, cross-linking may be performed under different conditions than the radical polymerization of the main-backbone. Preferably, cross-linking is initiated after changing the reaction conditions, 6.9. the pH value (addition of acid or base), the temperature, and the like. Optionally, the monomer composition further comprises a hydrophobic monomer, preferably a hydrophobic (meth)acrylic acid C4-18-alkyl ester; and/or an ethylenically unsaturated monomer.

In a preferred embodiment, the method is characterized in that the radically polymerizable monomers are selected from the non-ionic monomer of formula (I) and/or the cationic monomer of formula (II), wherein the amount of the radically polymerizable monomers being selected from the non-ionic monomer of formula (I) and/or the cationic monomer of formula (II) is between 80 and less than 100 wt-%, preferred 85 and 99 wt-%, most preferred 90 and 95 wt-% based on the total amount of radically polymerizable monomers, wherein the remainder is selected from the group consisting of any other ethylenically polymerizable monomer, a monomer of formula (III), a monomer of formula (IV), and the ethylenically unsaturated cross-linker containing 2, 3, 4 or 5 ethylenically unsaturated groups.

In this regard, the sum of the values in wt-% needs not to amount to 100 wt-%, since further ethylenically unsaturated monomers besides the monomers of formulae (I) and/or (II) may be contained in the monomer composition, i.e. in the reaction mixture, which have to be taken into account when determining the total amount of monomers. In one preferred embodiment, however, the monomer composition consists of monomers (a) and (b) so that the sum of the two values in wt-% amounts to 100 wt-%, i.e. no further monomers are present.

In a preferred embodiment, the monomer composition comprises
- at least 5 wt.-%, preferably at least 20 wt.-% of the non-ionic monomer of formula (I) 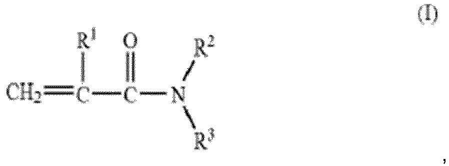 where
   R¹ means hydrogen or methyl;
   R² and R³ are, independently of each other, hydrogen, C₁-C₅-alkyl or C₁-C₅-hydroxyalkyl;
- at least 5 wt.-%, preferably at least 20 wt.-%, more preferred 25 to 47 wt.-%, most preferred 50.5 to 80 wt.-%, of the cationic monomer of formula (II) 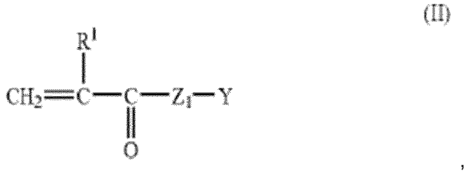 where
   R¹ means hydrogen or methyl;
   Z₁ is O, NH or NR₄, wherein R₄ means C₁-C₄-alkyl, preferably methyl, and
   Y is one of 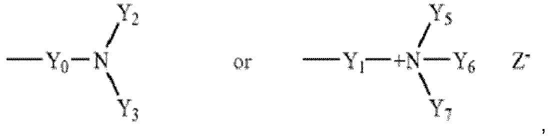 where
   Y₀ and Y₁ are a C₁-C₆ alkylene group, optionally substituted with one or more hydroxy groups, preferably ethylene or propylene, optionally substituted with one hydroxy group;
   Y2, Y3, Y5, Y6, Y7 independently of each other, are each C₁-C₆-alkyl, preferably methyl; and
   Z is a counterion, preferably a halogen, pseudo-halogen, acetate, or SO₄CH₃-;
- 0 to 1.25 wt.-%, preferably 0.0001 to 1 wt.-% of the ethylenically unsaturated cross-linker containing 2, 3, 4 or 5 ethylenically unsaturated groups; and
- optionally, further ethylenically unsaturated monomers.

In this regard again, the sum of the values in wt-% needs not to amount to 100 wt-%, since further ethylenically unsaturated monomers besides the monomers of formulae (I) and/or (II) may be contained in the monomer composition, i.e. in the reaction mixture, which have to be taken into account when determining the total amount of monomers. In one preferred embodiment, however, the monomer composition consists of monomers (a) and (b) so that the sum of the two values in wt-% amounts to 100 wt-%, i.e. no further monomers are present.

In the present application, all percentages with regard to the monomer composition is based on the total amount of monomers.

According to the invention, the copolymerization is performed in the presence of a polymeric dispersant.

In the state of the art, alternative aqueous polymeric systems are stabilized by low molecular weight salts. A high salt content ensures the stability of the polymeric system. Distinguishing from these systems, the stabilization of the w/w polymer dispersion according to the invention is basically ensured by the polymeric dispersant. This system renders moot a high salt concentration as in state of the art aqueous polymeric systems. In a preferred embodiment, the polymer dispersion has a salt content of less than 15 wt.%, more preferred a salt content of 0.1 to 10 wt.-%, most preferred 1 to 5 wt.-% based on the polymer dispersion. With the term "salt content", low molecular weight salts are meant. The polymeric electrolytes do not count for the calculation of the salt content.

The polymeric dispersant may be selected from the group consisting of a cellulose derivative, polyvinyl acetate, starch, starch derivative, dextran, polyvinylpyrrolidone, polyvinylpyridine, polyethylene imine, polyamine, polyvinyl imidazole, polyvinyl succinimide, polyvinyl-2-methylsuccinimide, polyvinyl-1,3-oxazolidone-2, polyvinyl-2-methylimidazoline, itaconic acid, (meth)acrylic acid, (meth)acrylic acid ester, (meth)acrylic acid amide; preferably a (meth)acryloyl amidoalkyl trialkylammonium halide or a (meth)acryloxyalkyl trialkylammonium halide.

In a preferred embodiment, the cationic polymeric dispersant is substantially linear, i.e. is not derived from monomer mixtures containing cross-linkers.

In a preferred embodiment, the polymeric dispersant is derived from one or more radically polymerizable, ethylenically unsaturated monomers. Preferably, the polymeric dispersant is derived from one type of a radically polymerizable, ethylenically unsaturated monomer, i.e. the polymeric dispersant is essentially a homopolymer. The term "essentially" means in this regard, that no second type of a monomer is purposely added when synthesizing the polymeric dispersant.

Preferably, the polymeric dispersant is derived from one or more cationic monomers, more preferably from a single cationic monomer.

In a further preferred embodiment, the method is characterized in that the polymeric dispersant is a homopolymer made of the cationic monomer of formula (II) 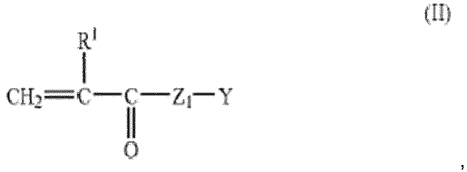 where
R¹ means hydrogen or methyl;
Z₁ is O, NH or NR₄, wherein R₄ means C₁-C₄-alkyl, preferably methyl, and
Y is one of 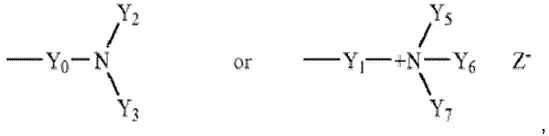 where
Y₀ and Y₁ are a C₁-C₆ alkylene group, optionally substituted with one or more hydroxy groups, preferably ethylene or propylene, optionally substituted with one hydroxy group;
Y2, Y3, Y5, Y6, Y7 independently of each other, are each C₁-C₆-alkyl, preferably methyl; and
Z is a counterion, preferably a halogen, pseudo-halogen, acetate, or SO₄CH₃⁻.

Preferably, Y₁, Y₂ and Y₃ are identical, preferably methyl. In a preferred embodiment, Z₁ is O or NH, Y₀ is ethylene or propylene, R¹ is hydrogen or methyl, and Y₁, Y₂ and Y₃ are methyl. The cationic monomer according to general formula (II) may be an ester (Z₁ = O), such as trimethylammonium-ethyl(meth)acrylate (ADAME quat.). Preferably, however, the cationic monomer according to general formula (I) is an amide (Z₁ = NH), particularly trimethylammonium-propyl acrylamide (DIMAPA quat).

Preferred radically polymerizable cationic monomers according to general formula (II) include quaternized dialkylaminoalkyl (meth)acrylates or dialkylaminoalkyl(meth)acrylamides with 1 to 3 C atoms in the alkyl or alkylene groups, more preferably the methyl chloride-quaternized ammonium salt of dimethylamino methyl(meth)acrylate, dimethylamino ethyl(meth)acrylate, dimethylamino propyl(meth)acrylate, diethylamino methyl(meth)acrylate, diethylamino ethyl-(meth)acrylate, diethylamino propyl(meth)acrylate, dimethylamino methyl(meth)acrylamide, dimethylamino ethyl(meth)acrylamide, dimethylamino propyl(meth)acrylamide, diethylamino methyl(meth)acrylamide, diethylamino ethyl(meth)acrylamide, diethylamino propyl(meth)-acrylamide.

Quaternized dimethylaminoethyl acrylate and dimethylaminopropylacrylamide are particularly preferred. Quaternization may be affected using dimethyl sulfate, diethyl sulfate, methyl chloride or ethyl chloride. In a preferred embodiment, monomers are quaternized with methyl chloride.

In a preferred embodiment, the polymeric dispersant is a homopolymer of trimethylammonium-propyl acrylamide chloride (DIMAPA quat) designated by IUPAC as (3-acrylamidopropyl)trimethylammonium chloride (APTAC).

Preferably, the polymeric dispersant is derived from a monomer composition comprising a cationic monomer selected from the group consisting of (alk)acrylamidoalkyltrialkyl ammonium halides (e.g., trimethylammonium-alkyl(meth)acrylamide halides), (alk)acryloyloxyalkyl trialkyl ammonium halides (e.g., trimethylammoniumalkyl(meth)acrylate halides), alkenyl trialkyl ammonium halides and dialkenyl dialkyl ammonium halides (e.g., diallyldialkylammonium halides). More preferably, the polymeric dispersant is a cationic polymer derived from a monomer composition comprising a cationic monomer selected from the group consisting of trimethylammonium-alkyl(meth)acrylate halides, trimethylammoniumalkyl(meth)acrylamide halides and diallyldialkylammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

In a preferred embodiment, the polymeric dispersant is derived from a dialkenyl dialkyl ammonium halide, preferably a diallyl dimethyl ammonium halide (DADMAC).

According to a preferred embodiment, the method is characterized in that the polymeric dispersant is a homopolymer made of a (meth)acryloyl amidopropyl trimethylammonium salt or a (meth)acryloyl oxyethyl trimethylammonium salt. In the framework of this disclosure, a homopolymer of a (meth)acrylate means, that either the homopolymer is a methacrylate or an acrylate.

In the framework of this application, the halide may be any acceptable halide as e.g. chloride, bromide or iodide; the counter ions of the salts may be any acceptable counter ions as e.g. halides, methosulfate, sulfate or others.

According to a preferred embodiment, the method is characterized in that the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 120.000 g/mol.

In a preferred embodiment, the method is characterized in that the viscosity of the polymer dispersion amounts to 1.800 mPas to less than 6.700 mPas , preferably 2.000 mPas to 6.000 mPas, more preferred 2.200 mPas to 5.500 mPas, most preferred 2.500 mPas to 5.000 mPas, as measured with a Brookfield viscometer with spindle 4 at 20°C and an angle speed of 10 rpm.

The viscosity is preferably the bulk viscosity which refers to the viscosity right after having obtained the cooled down product.

According to a preferred embodiment, the ratio of the polymeric dispersant to the dispersed polymer in the polymer dispersion is in the range of 0.45 : 1 to 1 : 0.9, preferred in the range of 0.5 : 1 to 1 : 1, more preferred in the range of 0.55 : 1 to less than 1 : 1, even more preferred in the range of 0.6 : 1 to 0.99 : 1, in particular in the range of 0.65 : 1 to 0.9 : 1.

The invention is in particular efficient if the method is characterized in that the total weight of the polymeric dispersant based on the total weight of the polymer dispersion is in the range of 10 to 28 wt.-%, preferred 12 to 26 wt.%, more preferred 14 to 24 wt.-%, even more preferred 16 to 22 wt.-%. According to a further embodiment, the method is characterized in that the total weight of the polymeric dispersant based on the total weight of the polymer dispersion is between 18 and 26 wt.-%, preferred 19 to 25 wt.-%.

According to a preferred embodiment, the method comprises the step of C) reducing the residual monomer content by adding to the reaction mixture an initiator at about the time of reaching the maximum temperature (Tₘₐₓ). In a more preferred embodiment, step C) is conducted isothermally, even more preferred, step C is performed by holding the temperature during step C on a level above 55°C and below 80°C, most preferred above 60°C and below 70°C.

The initiator used for reducing the residual monomer content could be any of the above additional initiators. However, it is preferred that the initiator is selected from a peroxide or an azo-compound, even more preferred selected from the group consisting of a hydroperoxide, a dialkylperoxide, a diacylperoxide and an azo-compound being substituted by tertiary carbon atoms, preferably carrying alkyl groups, nitrile groups and/or ester groups. In particular, the initiator used in step C is 2,2'-azobis(2-amidinopropane) dihydrochloride (V-50).

The invention's underlaying problems are further solved by the subject-matter of claim 13. Thus, according to a second aspect, the invention relates to a polymer dispersion comprising
a) a polymeric dispersant and
b) dispersed polymer derived from a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 120.000 g/mol; and/or wherein the polymer dispersion has a bulk viscosity below 6.700 mPas, preferably below 6.000 mPas, more preferred below 5.500 mPas, most preferred below 5.000 mPas as measured at 20°C with a Brookfield viscometer with spindle 4 and a speed of 10 rpm.

It has surprisingly been found that the invention results in a more stable product which is expressed in terms of a constant viscosity over time. Further, it has surprisingly been found that the bulk viscosity is in a range which facilitates the handling in downstream applications. The term "bulk viscosity" refers to the viscosity right after having obtained the cooled down product.

The invention's underlaying problems are further solved by the subject-matter of claim 14. Thus, according to a third aspect, the invention relates to a polymer dispersion obtained by a method for manufacturing the polymer dispersion according to the invention comprising the steps of
A) providing a reaction mixture in an aqueous medium comprising
   a) a polymeric dispersant and
   b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
B) subjecting the monomer composition in the reaction mixture to a radical polymerization to synthesize a dispersed polymer and to form the polymer dispersion,
wherein step B) is performed under controlled adiabatic conditions.

According to a preferred embodiment, the polymer dispersion is obtained by a method for manufacturing the polymer dispersion wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 120.000 g/mol.

According to a preferred embodiment, the polymer dispersion is obtained by a method for manufacturing the polymer dispersion wherein the polymer dispersion has a bulk viscosity below 6.700 mPas, preferably below 6.000 mPas, more preferred below 5.500 mPas, most preferred below 5.000 mPas as measured at 20°C with a Brookfield viscometer with spindle 4 and a speed of 10 rpm.

According to preferred embodiments, the polymer dispersion is obtained by a method for manufacturing the polymer dispersion wherein the polymer dispersion has a bulk viscosity above 1.800 mPas, preferably above 2.000 mPas, more preferred above 2.200 mPas, even more preferred above 2.500 mPas, most preferred above 3.000 mPas as measured at 20°C with a Brookfield viscometer with spindle 4 and a speed of 10 rpm.

It has surprisingly been found that the invention results in a more stable product which is expressed in terms of a constant viscosity over time. Further, it has surprisingly been found that the bulk viscosity is in a range which facilitates the handling in downstream applications. The term "bulk viscosity" refers to the viscosity right after having obtained the cooled down product.

The invention's underlaying problems are further solved by the subject-matter of claim 15. Thus, according to a fourth aspect, the invention relates to the use of the polymer dispersion according to the invention
a. as a flocculant in the sedimentation, flotation or filtration of solids,
b. as a thickener,
c. as a contaminant control,
d. as a dry strength aid, retention agent or drainage aid in papermaking.

Features relating to preferred embodiments of the first aspect of the present invention, which are solely disclosed relating to the first aspect of the invention represent preferred embodiments of the second and third embodiment as well.

In the following, exemplary embodiments (A) to (O) are disclosed which represent particularly preferred embodiments.
(A) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,
   wherein step B) is performed under controlled adiabatic conditions; wherein the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen.
(B) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, preferably which redox initiator system comprises an oxidizing agent and a reducing agent;
   wherein the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen, and wherein the polymeric dispersant is selected from the group consisting of a cellulose derivative, polyvinyl acetate, starch, starch derivative, dextran, polyvinylpyrrolidone, polyvinylpyridine, polyethylene imine, polyamine, polyvinyl imidazole, polyvinyl succinimide, polyvinyl-2-methylsuccinimide, polyvinyl-1 ,3-oxazolidone-2, polyvinyl-2-methylimidazoline, itaconic acid, (meth)acrylic acid, (meth)acrylic acid ester, (meth)acrylic acid amide; preferably a (meth)acryloyl amidoalkyl trialkylammonium halide or a (meth)acryloxyalkyl trialkylammonium halide.
(C) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, preferably which redox initiator system comprises an oxidizing agent and a reducing agent;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides,
   and wherein the polymeric dispersant is a homopolymer made of a (meth)acryloyl amidopropyl trimethylammonium salt or a (meth)acryloyl oxyethyl trimethylammonium salt.
(D) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, preferably which redox initiator system comprises an oxidizing agent and a reducing agent;
   wherein the monomer composition comprises a radically polymerizable monomer being (meth)acrylamide together with a radically polymerizable monomer selected from trimethylammonium-C2-C6-alkyl(meth)acrylate halides, preferably being an acryloyl oxyethyl trimethylammonium halide, and wherein the polymeric dispersant is a homopolymer made of a (meth)acryloyl amidopropyl trimethylammonium salt or a (meth)acryloyl oxyethyl trimethylammonium salt.
(E) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions within a time frame of less than 40 min and by sequentially or simultaneously adding a redox initiator system, preferably which redox initiator system comprises an oxidizing agent and a reducing agent;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides, and wherein the polymeric dispersant is a homopolymer made of a (meth)acryloyl amidopropyl trimethylammonium salt or a (meth)acryloyl oxyethyl trimethylammonium salt.
(F) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the weight ratio between the reducing agent and the oxidizing agent is below 35 :1 and above 2 :1, preferably below 15 :1 and above 3:1, more preferred below 9 : 1 and above 4:1.
(G) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the weight ratio between the reducing agent and the oxidizing agent is below 35 :1 and above 2 :1, preferably below 15 :1 and above 3:1, more preferred below 9 : 1 and above 4 : 1; and wherein the polymer dispersion has a bulk viscosity below 6.700 mPas and above 1.800 mPas, preferably below 6.000 mPas and above 2.000 mPas, more preferred below 5.500 mPas and above 2.200 mPas, most preferred below 5.000 mPas and above 2.500 mPas as measured at 20°C with a Brookfield viscometer with spindle 4 and speed 10 rpm.
(H) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the oxidizing agent has a redox potential of from 0.6 to 2.0 V, and/or the reducing agent has a redox potential of from -2 to 0.3 V,
   wherein the weight ratio between the reducing agent and the oxidizing agent is below 35 :1 and above 2 :1, preferably below 15 :1 and above 3:1, more preferred below 9 : 1 and above 4:1.
(I) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the oxidizing agent has a redox potential of from 0.6 to 2.0 V, and/or the reducing agent has a redox potential of from -2 to 0.3 V,
   wherein the weight ratio between the reducing agent and the oxidizing agent is below 35 :1 and above 2:1, preferably below 15 :1 and above 3:1, more preferred below 9 : 1 and above 4 : 1; and wherein the polymer dispersion has a bulk viscosity below 6.700 mPas and above 1.800 mPas, preferably below 6.000 mPas and above 2.000 mPas, more preferred below 5.500 mPas and above 2.200 mPas, most preferred below 5.000 mPas and above 2.500 mPas as measured at 20°C with a Brookfield viscometer with spindle 4 and speed 10 rpm.
(J) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the oxidizing agent comprises a peroxydiphosphate; hydrogen peroxide; an alkyl hydroperoxide, more preferred t-butyl hydroperoxide; or an aryl hydroperoxide, more preferred cumene hydroperoxide; and the reducing agent comprises sodium bisulfite, potassium bisulfite, ammonium bisulfite, sodium sulfite, potassium sulfite, ammonium sulfite, a hydrogen sulfite; a thiosulfate; an amine; an acid, more preferred ascorbic acid or erythorbic acid;
   wherein the weight ratio between the reducing agent and the oxidizing agent is below 35 :1 and above 2 :1, preferably below 15 :1 and above 3:1, more preferred below 9 : 1 and above 4:1.
(K) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the oxidizing agent comprises a peroxydiphosphate; hydrogen peroxide; an alkyl hydroperoxide, more preferred t-butyl hydroperoxide; or an aryl hydroperoxide, more preferred cumene hydroperoxide; and the reducing agent comprises sodium bisulfite, potassium bisulfite, ammonium bisulfite, sodium sulfite, potassium sulfite, ammonium sulfite, a hydrogen sulfite; a thiosulfate; an amine; an acid, more preferred ascorbic acid or erythorbic acid;
   wherein the weight ratio between the reducing agent and the oxidizing agent is below 35 :1 and above 2 :1, preferably below 15 :1 and above 3:1, more preferred below 9 : 1 and above 4 : 1; and wherein the polymer dispersion has a bulk viscosity below 6.700 mPas and above 1.800 mPas, preferably below 6.000 mPas and above 2.000 mPas, more preferred below 5.500 mPas and above 2.200 mPas, most preferred below 5.000 mPas and above 2.500 mPas as measured at 20°C with a Brookfield viscometer with spindle 4 and speed 10 rpm.
(L) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent; wherein the oxidizing agent has a redox potential of from 0.6 to 2.0 V, and the reducing agent has a redox potential of from -2 to 0.3 V;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides,
   and wherein the polymeric dispersant is a homopolymer made of a (meth)acryloyl amidopropyl trimethylammonium salt or a (meth)acryloyl oxyethyl trimethylammonium salt.
(M) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the oxidizing agent comprises a peroxydiphosphate; hydrogen peroxide; an alkyl hydroperoxide, more preferred t-butyl hydroperoxide; or an aryl hydroperoxide, more preferred cumene hydroperoxide; and the reducing agent comprises sodium bisulfite, potassium bisulfite, ammonium bisulfite, sodium sulfite, potassium sulfite, ammonium sulfite, a hydrogen sulfite; a thiosulfate; an amine; an acid, more preferred ascorbic acid or erythorbic acid;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides, and wherein the polymeric dispersant is a homopolymer made of a (meth)acryloyl amidopropyl trimethylammonium salt or a (meth)acryloyl oxyethyl trimethylammonium salt.
(N) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the weight ratio between the reducing agent and the oxidizing agent is below 35 :1 and above 2 :1, preferably below 15 :1 and above 3:1, more preferred below 9 : 1 and above 4 : 1;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides, and wherein the polymeric dispersant is a homopolymer made of a (meth)acryloyl amidopropyl trimethylammonium salt or a (meth)acryloyl oxyethyl trimethylammonium salt.
(O) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition in the reaction mixture to a radical polymerization to synthesize a dispersed polymer and to form the polymer dispersion,

   wherein step B) is performed under controlled adiabatic conditions by sequentially or simultaneously adding a redox initiator system, which redox initiator system comprises an oxidizing agent and a reducing agent,
   wherein the oxidizing agent comprises a peroxydiphosphate; hydrogen peroxide; an alkyl hydroperoxide, more preferred t-butyl hydroperoxide; or an aryl hydroperoxide, more preferred cumene hydroperoxide; and the reducing agent comprises sodium bisulfite, potassium bisulfite, ammonium bisulfite, sodium sulfite, potassium sulfite, ammonium sulfite, a hydrogen sulfite; a thiosulfate; an amine; an acid, more preferred ascorbic acid or erythorbic acid;
   wherein the weight ratio between the reducing agent and the oxidizing agent is below 35 :1 and above 2 :1, preferably below 15 :1 and above 3:1, more preferred below 9 : 1 and above 4:1,
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides, and wherein the polymeric dispersant is a homopolymer made of a (meth)acryloyl amidopropyl trimethylammonium salt or a (meth)acryloyl oxyethyl trimethylammonium salt.

Further, the following items are disclosed herewith:
1. Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition to a radical polymerization to synthesize a dispersed polymer and to form the polymer dispersion,
   wherein step B) is performed under controlled adiabatic conditions.
2. Method according to item 1, characterized in that step B) is performed under controlled adiabatic conditions by sequentially or simultaneously adding a redox initiator system, preferably which redox initiator system comprises an oxidizing agent and a reducing agent.
3. Method according to item 1 or item 2, characterized in that the oxidizing agent has a redox potential of from 0.6 to 2.0 V, preferably wherein the oxidizing agent comprises a peroxydiphosphate; hydrogen peroxide; an alkyl hydroperoxide, more preferred t-butyl hydroperoxide; or an aryl hydroperoxide, more preferred cumene hydroperoxide; and/or the reducing agent has a redox potential of from -2 to 0.3 V, preferably wherein the reducing agent comprises sodium bisulfite, potassium bisulfite, ammonium bisulfite, sodium sulfite, potassium sulfite, ammonium sulfite, a hydrogen sulfite; a thiosulfate; an amine; an acid, more preferred ascorbic acid or erythorbic acid.
4. Method according any one of items 1 to 3, characterized in that the weight ratio between the reducing agent and the oxidizing agent is below 35 :1 and above 2 :1, preferably below 15 :1 and above 3:1, more preferred below 9 : 1 and above 4:1.
5. Method according to any one of items 1 to 4, characterized in that the monomer composition comprising the radically polymerizable monomers are selected from the group consisting of one or more of the following:
   i. a non-ionic monomer of formula (I) 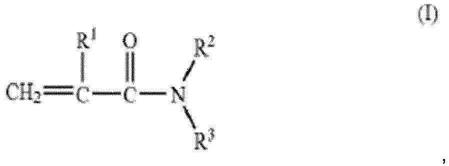 where
      R¹ means hydrogen or methyl;
      R² and R³ are, independently of each other, hydrogen, C₁-C₅-alkyl or C₁-C₅-hydroxyalkyl,
   ii. a cationic monomer of formula (II) 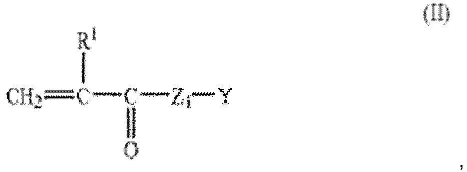 where
      R¹ means hydrogen or methyl;
      Z₁ is O, NH or NR₄, wherein R₄ means C₁-C₄-alkyl, preferably methyl, and
      Y is one of 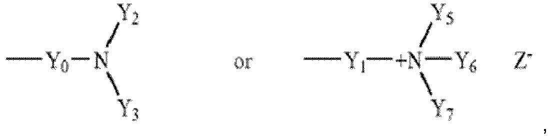 where
      Y₀ and Y₁ are a C₁-C₆ alkylene group, optionally substituted with one or more hydroxy groups, preferably ethylene or propylene, optionally substituted with one hydroxy group;
      Y2, Y3, Y5, Y6, Y7 independently of each other, are each C₁-C₆-alkyl, preferably methyl; and
      Z⁻ is a counterion, preferably a halogen, pseudo-halogen, acetate,
      or SO₄CH₃-; and
   iii. an amphiphilic monomer of formulae (III) or (IV) 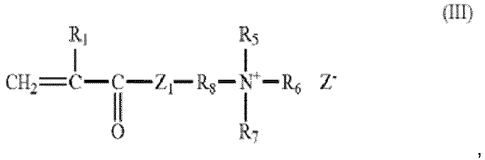 where
      Z₁ is O, NH, NR₄, wherein R₄ means C₁-C₄-alkyl, preferably methyl,
      R¹ means hydrogen or methyl,
      R₈ is a C₁-C₆ alkylene group, preferably ethylene or propylene,
      R₅ and R₆ are, independently of each other, each C₁-C₆-alkyl, preferably methyl,
      R₇ is a C₈-C₃₂ alkyl, optionally substituted with one or more hydroxy groups, preferably C₁₂-C₂₀ alkyl, optionally substituted with one hydroxy group, and Z⁻ is a counterion, preferably a halogen, pseudo-halogen, acetate,
      or SO₄CH₃-; or 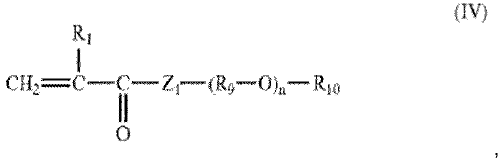 where
      Z₁ is O, NH, NR₄, wherein R₄ means C₁-C₄-alkyl, preferably methyl,
      R¹ means hydrogen or methyl,
      R₁₀ means hydrogen, C₈-C₃₂ alkyl, C₈-C₃₂ aryl and/or C₈-C₃₂ aralkyl, preferably C₁₂-C₂₀ alkyl,
      R₉ is a C₁-C₆ alkylene group, preferably an ethylene group or propylene group, and
      n is an integer between 1 and 50, preferably between 2 and 30, more preferred 3 and 15, most preferred 4 and 8.
   (Remark: cationic monomer means also monomer being rendered to be cationic by protonation)
6. Method according to any one of items 1 to 5, characterized in that the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen; wherein most preferred the monomer composition comprising the radically polymerizable monomers at least comprises the non-ionic monomer of formula (I) being (meth)acrylamide and the cationic monomer of formula (II) being (meth)acryloyl amidopropyl trimethylammonium chloride or (meth)acryloyl oxyethyl trimethylammonium chloride.
7. Method according to any one of items 1 to 6, characterized in that the radically polymerizable monomers are selected from the non-ionic monomer of formula (I) and/or the cationic monomer of formula (II), wherein the amount of the radically polymerizable monomers being selected from the non-ionic monomer of formula (I) and/or the cationic monomer of formula (II) is between 80 and less than 100 wt-%, preferred 85 and 99 wt-%, most preferred 90 and 95 wt-% based on the total amount of radically polymerizable monomers, wherein the remainder is selected from the group consisting of any other ethylenically polymerizable monomer, a monomer of formula (III), a monomer of formula (IV), and a difunctional ethylenically polymerizable monomer.
8. Method according to any one of items 1 to 7, characterized in that the polymeric dispersant is a homopolymer made of the cationic monomer of formula (II) 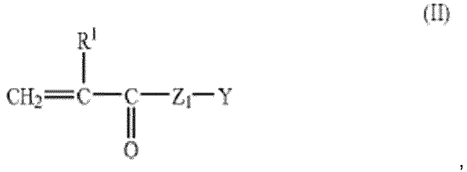 where
   R¹ means hydrogen or methyl;
   Z₁ is O, NH or NR₄, wherein R₄ means C₁-C₄-alkyl, preferably methyl, and
   Y is one of 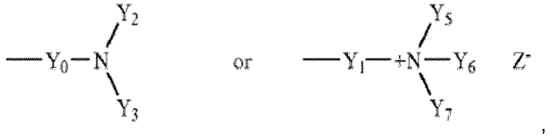 where
   Y₀ and Y₁ are a C₁-C₆ alkylene group, optionally substituted with one or more hydroxy groups, preferably ethylene or propylene, optionally substituted with one hydroxy group;
   Y2, Y3, Y5, Y6, Y7 independently of each other, are each C₁-C₆-alkyl, preferably methyl; and
   Z is a counterion, preferably a halogen, pseudo-halogen, acetate, or SO₄CH₃⁻.
9. Method according to any one of items 1 to 8, characterized in that the polymeric dispersant is a homopolymer made of a (meth)acryloyl amidopropyl trimethylammonium salt or a (meth)acryloyl oxyethyl trimethylammonium salt.
10. Method according to any one of items 1 to 9, characterized in that the ratio of the polymeric dispersant to the dispersed polymer in the polymer dispersion is in the range of 0.45 : 1 to 1 : 0.9, preferred in the range of 0.5 : 1 to 1 : 1, more preferred in the range of 0.55 : 1 to less than 1 : 1, even more preferred in the range of 0.6 : 1 to 0.99 : 1, in particular in the range of 0.65 : 1 to 0.9 : 1.
11. Method according to any one of items 1 to 10, characterized in that the method comprises the step of
   C) reducing the residual monomer content by adding to the reaction mixture an initiator at about the time of reaching the maximum temperature (Tₘₐₓ), and
   preferably holding the temperature during step C on a level above 55°C and below 80°C, more preferred above 60°C and below 70°C.
12. Method according to item 11, characterized in that the initiator is selected from a peroxide or an azo-compound, preferably selected from the group consisting of a hydroperoxide, a dialkylperoxide, a diacylperoxide and an azo-compound being substituted by tertiary carbon atoms, preferably carrying alkyl groups, nitrile groups and/or ester groups.
13. A polymer dispersion comprising
   a) a polymeric dispersant and
   b) dispersed polymer derived from a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 120.000 g/mol;
   and/or wherein the polymer dispersion has a bulk viscosity below 6.700 mPas, preferably below 6.000 mPas, more preferred below 5.500 mPas, most preferred below 5.000 mPas as measured at 20°C with a Brookfield viscometer with spindle 4 and speed 10 rpm.
14. A polymer dispersion obtained by a method for manufacturing the polymer dispersion according to any one of items 1 to 11 comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition to a radical polymerization to synthesize a dispersed polymer and to form the polymer dispersion,

   wherein step B) is performed under controlled adiabatic conditions;
   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 120.000 g/mol;
   and/or wherein the polymer dispersion has a bulk viscosity below 6.700 mPas, preferably below 6.000 mPas, more preferred below 5.500 mPas, most preferred below 5.000 mPas as measured at 20°C with a Brookfield viscometer with spindle 4 and a speed of 10 rpm.
15. Use of the polymer dispersion according to item 12 or item 13
   a. as a flocculant in the sedimentation, flotation or filtration of solids,
   b. as a thickener,
   c. as a contaminant control,
   d. as a dry strength aid, retention agent or drainage aid in papermaking.

### EXAMPLES

In the following, the applied test methods are described in detail:
The bulk viscosity is measured as follows:
Use the product directly for the measurement. The spindle No. 4 is slowly immersed into the product and the viscosity determined with a Brookfield RVT viscometer at 10 rpm. The measurement is terminated when the reading remains constant for a period of 30 sec.

The solution viscosity is measured in DI Water and determined as follows:
A solution of 5 wt-% in water is prepared. In a 400 ml beaker 323.0 ± 0.1 g demineralised water is weighed. Then 17.0 ± 0.1 g of the product are added (22 ± 3°C) under stirring at 300 rpm. The dissolving time amounts to 60 min. at 300 ±10 rpm. Thereafter, the solution has to rest for 5 min. Now the spindle No. 2 is slowly immersed, and the viscosity determined with a Brookfield RFT viscometer at 10 rpm. The measurement is terminated when the reading remains constant for a period of 30 sec.

The salt viscosity is measured in a 10% NaCl solution and determined as follows:
In a 400 ml beaker 289.0 ± 0.1 g demineralized water is weighed. Then 17.0 ± 0.1 g of the product are added (22 ± 3°C) under stirring at 300 rpm. The dissolving time amounts to 45 min. at 300 ± 10 rpm and then 34.0 ± 0.1 g NaCl is added. The solution is stirred for further 15 min. After this the solution has to rest for 5 min. Now the spindle No. 1 is slowly immersed, and the viscosity determined with a Brookfield RVT viscometer at 10 rpm. The measurement is terminated when the reading remains constant for a period of 30 sec.

The stability is determined via two distinguishing methods: (a) centrifugation and (b) oven test. The tests are performed as follows:
(a) 100 ± 0.1 g of dispersion is weighed into a centrifugation tube. The tube is place into lab centrifuge (Hermle Z300) and is centrifuged for 1 h @ 4000 rpm. The, the liquid part of the sample is phased out over 3 min and the sediment in the centrifugation tube is weighed back. Higher sediment means lower phase stability.
(b) Sample is stored in a drying oven at 40°C for 3 d. The appearance is monitored visually.

The molar mass is measured via Size Exclusion Chromatography (SEC). The measurement is in particular performed for the determination of the molecular weight of the dispersant.

The molecular weights are characterized via aqueous SEC using Pullulan standards for the calibration.

### Sample Preparation:

The samples are diluted with the eluent (polymer make-down in a measuring flask) and filtered through a 1µm filter (M&N) (via syringe) before they are injected.

If the machine is equipped with an autosampler filter the solution through a 1µm filter into a vial.

### Used parameters:

| | |
|---|---|
| apparatus: | SEC (Agilent) |
| column: | Novema 3000 (PSS) |
| detector: | RI |
| eluent: | 1.5 wt% formic acid in water |
| flow rate: | 1 ml/min |
| calibration standards: | pullulan with different Mw |

The following examples further illustrate the invention but are not to be construed as limiting its scope.

### Example 1: Synthesis of the polymeric dispersant:

At first, 294.06 g water, 666.7 g acryloyl amidopropyl trimethylammonium chloride (DIMAPA quat.) (60wt%) and sulfuric acid (50wt%) to adjust the pH to 5.0 ± 0.2 were weighed in a 2 L vessel. Then the monomer solution was sparged with nitrogen for 30 min by stirring. Subsequently, the aqueous solution was heated up to 65 °C and 2-mercaptoethanol and V-50 (2,2'-Azobis(2-amidinopropane) dihydrochloride) were added to the solution. After reaching Tmax, the vessel is cooled down to ≤ 80°C. Then, two additional portions of initiator (V-50) were given to the product in between 10 min for residual monomer burn out. The product was stirred for 1 h at 70°C. The final aqueous product was cooled down to 30°C. The dispersants were provided in 40 wt.-% aqueous solutions.

### Specifications:

- Product viscosity [mPas]: 110-180
- pH (neat): 4.9-5.3
- Total solids [%]: 40-43
- Mw_{SEC} [g/mol]: 70000-110000

### Example 2: Synthesis of polymer dispersion (charge density 15 mole%)

In a discontinuous process (batch size 1,000 kg), acrylamide and acryloyl oxyethyl trimethylammonium chloride (ADAME quat.) were polymerized in an aqueous solution in the presence of homopoly acryloyl amidopropyl trimethylammonium chloride (polymeric dispersant). The water-phase was prepared at 200 rpm.

Firstly, 206.90 kg soft water, 261.80 kg Bio-acryl amide (49 wt.-%), 77.20 kg acryloyl oxyethyl trimethylammonium chloride (ADAME quat) (80 wt%), 412.50 kg polymeric dispersant of Example 1, 10.00 kg ammonium sulphate and 0.20 kg Trilon C were loaded into the reaction vessel. The pH value was adjusted to pH 5.0±0.2 with approximately 0.10 kg of sulphuric acid (50 %). The vessel was evacuated five times before being aerated with nitrogen. The initiator composition was added at a negative pressure of 0.5 bar and maximum agitator speed. Initiating started at 22±1 °C with the addition of 0.34 kg V-50 in 3.05 kg soft water, 0.025 kg sodium persulfate in 0.47 kg soft water, 0.014 kg sodium bisulfite in 0.27 kg soft water, and 0.003 kg t-butylhydroperoxide (70 %) in 1 kg soft water. Afterwards the vessel was aerated again with nitrogen. After reaching the maximum temperature, a solution of 0.17 kg V-50 in 1.53 kg soft water was added to reduce the monomer content. After a one-hour post reaction time, the product was cooled down to a temperature below 40°C. Then, 8.30 kg citric acid and 0.82 kg of the biocide Acticide SPX were added and the product was cooled down to a temperature below 30°C.

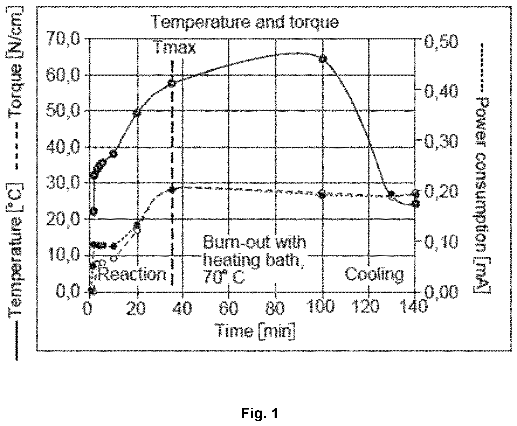

A typical reaction profile of a w/w polymeric dispersion is shown in Fig. 1. After addition of the initiators, the reaction begins and the temperature evolves as shown in Table 1. The start of the initiation is at ambient temperature (here 22°C). In particular, the initiator package is added to the monomer solution in the following sequence:
∘ V-50 (2,2'-Azobis(2-amidinopropane) dihydrochloride)
∘ Sodium persulfate
∘ Sodium bisulfite
∘ t-BHP (tert.-Butylhydro peroxide), t-BHP kicks-off the polymerization at 1 min.

At the maximum temperature (Tmax) of 57.3°C, further initiator is added in order to remove the monomeric residues. In particular, at Tmax, a heating bath with 70°C is placed under the flask to guarantee the so-called burn-out phase above 60°C like in the production plant. V-50 is acting as burn-out initiator. A cooling step starts after 60 min of burn-out phase.

**Tab. 1: Temperature profile during step B**

| Time [min] | Temperature [°C] |
|---|---|
| 0 | 22,2 |
| 1 | 22,2 |
| 2 | 31,9 |
| 3 | 34,1 |
| 4 | 34,8 |
| 5 | 35,4 |
| 10 | 38,2 |
| 20 | 49,1 |
| 35 | 57,3 |

In the following, the effect of the initiators will be investigated. The initiators control the reaction in line with the invention.

The concentrations of the initiators in the starter package were varied separately and all together to understand the effect on the polymerization. The below table and diagrams summarize our findings.

**Tab. 2: Variation t-BHP level, complete initiator package, and bisulfite level**

| Batch | V-50 [ppm] | Sodium persulfate [ppm] | Sodium bisulfite [ppm] | t-BHP [ppm] | Torque reaction [N/cm]^{e} | Time to Tmax [min] | Bulk viscosity [mPas]^{a} | Solution viscosity [mPas]^{b} | Salt viscosity [mPas]^{c} | Sediment centrifuge [%]^{d} | Storage 40°C |
|---|---|---|---|---|---|---|---|---|---|---|---|
| #1 | 375 | 27,3 | 16,0 | **3,00** | 29 | 25 | 3.840 | 1490 | 540 | 21% | OK |
| #2 | 375 | 27,3 | 16,0 | **2,35** | 28 | 35 | 3.880 | 1800 | 650 | 15% | OK |
| #3 | 375 | 27,3 | 16,0 | **1,80** | 29 | 40 | 4.160 | 2190 | 725 | 17% | OK |
| #4 | 375 | 27,3 | 16,0 | **1,20** | 41 | 45 | 3.240 | 2590 | 865 | 12% | OK |
| #5 | 413 | 30,0 | 17,5 | 2,60 | 26 | 30 | 4.920 | 1660 | 570 | 15% | OK |
| #2 | 375 | 27,3 | 16,0 | 2,35 | 28 | 35 | 3.880 | 1800 | 650 | 15% | OK |
| #6 | 337 | 24,5 | 14,5 | 2,12 | 27 | 40 | 5.280 | 2200 | 740 | 17% | OK |
| #7 | 375 | 27,3 | **25,0** | 2,35 | 30,2 | 40 | 6.720 | 1760 | 630 | 30% | post thickened |
| #2 | 375 | 27,3 | **16,0** | 2,35 | 28 | 35 | 3.880 | 1800 | 650 | 15% | OK |
| #8 | 375 | 27,3 | **12,5** | 2,35 | 29 | 30 | 3.760 | 1780 | 620 | 17% | OK |
| #9 | 375 | 27,3 | **7,5** | 2,35 | 29 | 25 | 3.440 | 1970 | 750 | 16% | OK |
| #10 | 413 | **0,0** | 17,5 | 2,60 | 25 | 35 | 5.000 | 1650 | 580 | 23% | OK |
| #11 | 413 | **60,0** | 17,5 | 2,60 | 25 | 35 | 4.500 | 1650 | 570 | 18% | OK |

| | | | | | | | | | | | |
|---|---|---|---|---|---|---|---|---|---|---|---|
| ^{a} 20°C, spindle 4, speed 10 ^{b} 20°C, spindle 2, speed 10, 5 wt% as is ^{c} 20°C, spindle 1, speed 10, 5 wt% as is in 10% NaCl solution ^{d} 20°C, lab centrifuge Hermle Z300, 1 h @ 4000 rpm ^{e} Torque @ lab mixer IKA Power Control, max. 65 N/cm | | | | | | | | | | | |

The results are summarized as follows, i.e. the variation of initiator levels shows the following outcome. As a first result, batch #2 performs best overall.

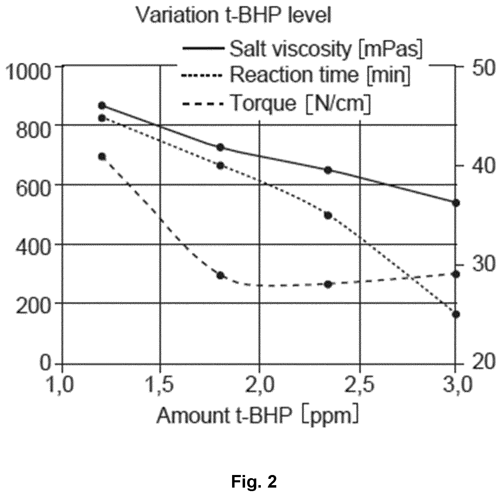

Fig. 2 shows the properties of salt viscosity, reaction time and torque depending upon the varying level of the tert.-butylhydro peroxide concentration, while the other initiator amounts are kept constant (batch #1 to #4). A lower t-BHP concentration results in a higher salt viscosity (Mw of the polymer) and longer reaction time. The torque during the polymerization is quite constant except at the lowest level of t-BHP. The reason for this is the higher molecular weight.

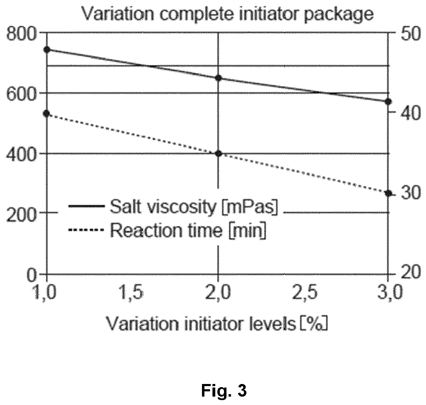

Fig. 3 shows the effect when varying the complete initiator package (batches #5, #2, #6). The lower initiator levels yield again in a higher salt viscosity (Mw of the polymer) and longer reaction time. The torque during the polymerization is quite constant.

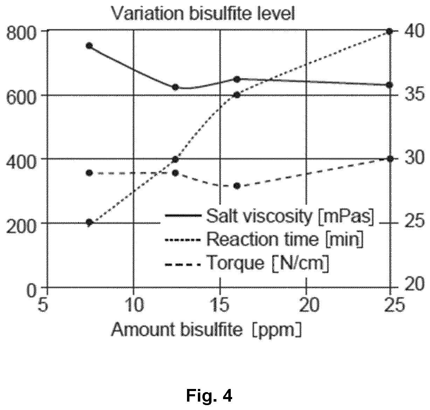

Fig. 4 shows the effect when varying the sodium bisulfite while keeping the other initiator amounts constant (batches #7, #2, #8, #9). A lower bisulfite concentration yields in shorter reaction time while torque and salt viscosity remained quite constant. The effect of the this initiator represents a surprise. In particular, batch #7 showed an unacceptable stability and a bulk viscosity which was too high. As can be seen, at lowest bisulfite level, the salt viscosity (Mw) was increased however, the final dispersion was post-thickened after the stability test.

Even large variations of the sodium persulfate content while keeping the other initiator amounts constant (batch #10 and #11) do not exhibit beneficial effects in view of stability. All parameters are kept quite constant.

## Claims

1. Method for manufacturing a polymer dispersion comprising the steps of
A) providing a reaction mixture in an aqueous medium comprising
a) a polymeric dispersant and
b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
B) subjecting the monomer composition to a radical polymerization to synthesize a dispersed polymer and to form the polymer dispersion,
wherein step B) is performed under controlled adiabatic conditions.

2. Method according to claim 1, **characterized in that** step B) is performed under controlled adiabatic conditions by sequentially or simultaneously adding a redox initiator system, preferably which redox initiator system comprises an oxidizing agent and a reducing agent.

3. Method according to claim 2, **characterized in that** the oxidizing agent has a redox potential of from 0.6 to 2.0 V, preferably wherein the oxidizing agent comprises a peroxydiphosphate; hydrogen peroxide; an alkyl hydroperoxide, more preferred t-butyl hydroperoxide; or an aryl hydroperoxide, more preferred cumene hydroperoxide; and/or the reducing agent has a redox potential of from -2 to 0.3 V, preferably wherein the reducing agent comprises sodium bisulfite, potassium bisulfite, ammonium bisulfite, sodium sulfite, potassium sulfite, ammonium sulfite, a hydrogen sulfite; a thiosulfate; an amine; an acid, more preferred ascorbic acid or erythorbic acid.

4. Method according any one of claims 1 to 3, **characterized in that** the weight ratio between the reducing agent and the oxidizing agent is below 35 :1 and above 2 :1, preferably below 15 :1 and above 3:1, more preferred below 9 : 1 and above 4:1.

5. Method according to any one of claims 1 to 4, **characterized in that** the monomer composition comprising the radically polymerizable monomers are selected from the group consisting of one or more of the following:
i. a non-ionic monomer of formula (I) 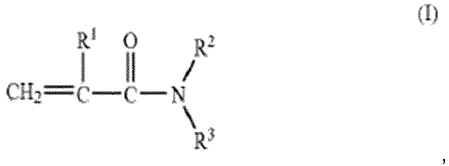 where
R¹ means hydrogen or methyl;
R² and R³ are, independently of each other, hydrogen, C₁-C₅-alkyl or C₁-C₅-hydroxyalkyl,
ii. a cationic monomer of formula (II) 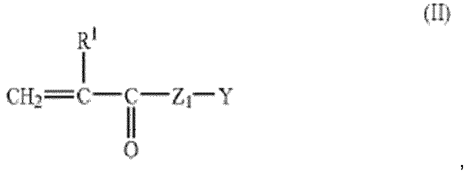 where
R¹ means hydrogen or methyl;
Z₁ is O, NH or NR₄, wherein R₄ means C₁-C₄-alkyl, preferably methyl, and
Y is one of 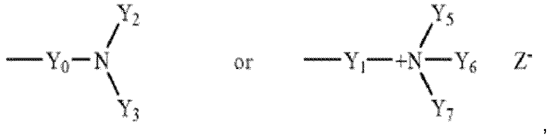 where
Y₀ and Y₁ are a C₁-C₆ alkylene group, optionally substituted with one or more hydroxy groups, preferably ethylene or propylene, optionally substituted with one hydroxy group;
Y2, Y3, Y5, Y6, Y7 independently of each other, are each C₁-C₆-alkyl, preferably methyl; and
Z⁻ is a counterion, preferably a halogen, pseudo-halogen, acetate,
or SO₄CH₃-;
iii. an amphiphilic monomer of formulae (III) or (IV) 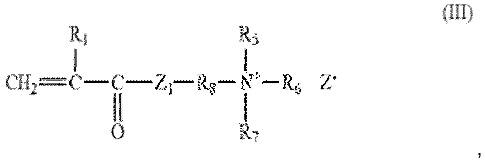 where
Z₁ is O, NH, NR₄, wherein R₄ means C₁-C₄-alkyl, preferably methyl,
R₁ means hydrogen or methyl,
R₈ is a C₁-C₆ alkylene group, preferably ethylene or propylene,
R₅ and R₆ are, independently of each other, each C₁-C₆-alkyl, preferably methyl,
R₇ is a C₈-C₃₂ alkyl, optionally substituted with one or more hydroxy groups, preferably C₁₂-C₂₀ alkyl, optionally substituted with one hydroxy group, and Z⁻ is a counterion, preferably a halogen, pseudo-halogen, acetate,
or SO₄CH₃-; or 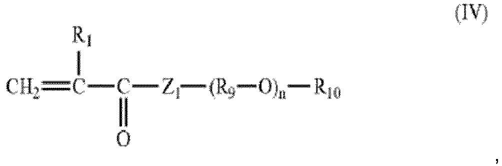 where
Z₁ is O, NH, NR₄, wherein R₄ means C₁-C₄-alkyl, preferably methyl,
R₁ means hydrogen or methyl,
R₁₀ means hydrogen, C₈-C₃₂ alkyl, C₈-C₃₂ aryl and/or C₈-C₃₂ aralkyl, preferably C₁₂-C₂₀ alkyl,
R₉ is a C₁-C₆ alkylene group, preferably an ethylene group or propylene group, and
n is an integer between 1 and 50, preferably between 2 and 30, more preferred 3 and 15, most preferred 4 and 8; and
iv. an ethylenically unsaturated cross-linker containing 2, 3, 4 or 5 ethylenically unsaturated groups.

6. Method according to any one of claims 1 to 5, **characterized in that** the monomer composition comprising the radically polymerizable monomers comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen; wherein most preferred the monomer composition comprising the radically polymerizable monomers at least comprises the non-ionic monomer of formula (I) being (meth)acrylamide and the cationic monomer of formula (II) being (meth)acryloyl amidopropyl trimethylammonium chloride or (meth)acryloyl oxyethyl trimethylammonium chloride.

7. Method according to any one of claims 1 to 6, **characterized in that** the monomer composition comprising the radically polymerizable monomers comprises
- at least 5 wt.-%, preferably at least 20 wt.-% of the non-ionic monomer of formula (I) 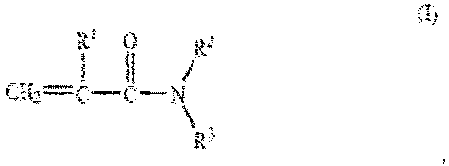 where
R¹ means hydrogen or methyl;
R² and R³ are, independently of each other, hydrogen, C₁-C₅-alkyl or C₁-C₅-hydroxyalkyl;
- at least 5 wt.-%, preferably at least 20 wt.-%, more preferred 25 to 47 wt.-%, most preferred 50.5 to 80 wt.-%, of the cationic monomer of formula (II) 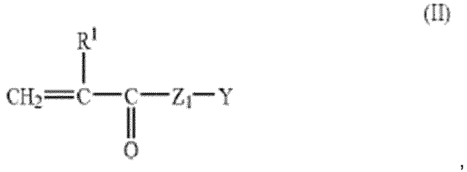 where
R¹ means hydrogen or methyl;
Z₁ is O, NH or NR₄, wherein R₄ means C₁-C₄-alkyl, preferably methyl, and
Y is one of 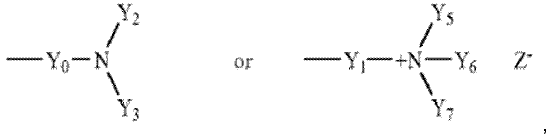 where
Y₀ and Y₁ are a C₁-C₆ alkylene group, optionally substituted with one or more hydroxy groups, preferably ethylene or propylene, optionally substituted with one hydroxy group;
Y2, Y3, Y5, Y6, Y7 independently of each other, are each C₁-C₆-alkyl, preferably methyl; and
Z is a counterion, preferably a halogen, pseudo-halogen, acetate, or SO₄CH₃-;
- 0 to 1.25 wt.-%, preferably 0.0001 to 1 wt.-% of the ethylenically unsaturated cross-linker containing 2, 3, 4 or 5 ethylenically unsaturated groups; and
- optionally, further ethylenically unsaturated monomers.

8. Method according to any one of claims 1 to 7, **characterized in that** the ethylenically unsaturated cross-linker is a cross-linker containing 2, 3 or 4 ethylenically unsaturated groups being preferably selected from the group consisting of methylene bisacrylamide, polyethylene glycol diacrylate, triallylamine., and tetraallylammonium chloride.

9. Method according to any one of claims 1 to 8, **characterized in that** the polymeric dispersant is a homopolymer made of the cationic monomer of formula (II) 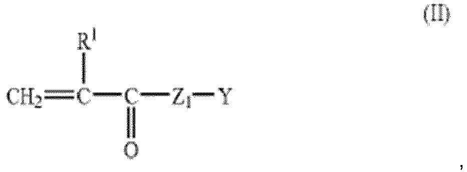 where
R¹ means hydrogen or methyl;
Z₁ is O, NH or NR₄, wherein R₄ means C₁-C₄-alkyl, preferably methyl, and
Y is one of 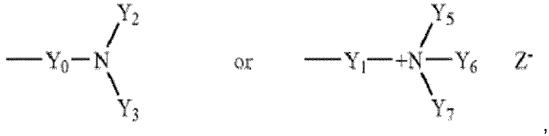 where
Y₀ and Y₁ are a C₁-C₆ alkylene group, optionally substituted with one or more hydroxy groups, preferably ethylene or propylene, optionally substituted with one hydroxy group;
Y2, Y3, Y5, Y6, Y7 independently of each other, are each C₁-C₆-alkyl, preferably methyl; and
Z is a counterion, preferably a halogen, pseudo-halogen, acetate, or SO₄CH₃⁻.

10. Method according to any one of claims 1 to 9, **characterized in that** the polymeric dispersant is a homopolymer made of a (meth)acryloyl amidopropyl trimethylammonium salt or a (meth)acryloyl oxyethyl trimethylammonium salt.

11. Method according to any one of claims 1 to 10, **characterized in that** the ratio of the polymeric dispersant to the dispersed polymer in the polymer dispersion is in the range of 0.45 : 1 to 1 : 0.9, preferred in the range of 0.5 : 1 to 1 : 1, more preferred in the range of 0.55 : 1 to less than 1 : 1, even more preferred in the range of 0.6 : 1 to 0.99 : 1, in particular in the range of 0.65 : 1 to 0.9 : 1.

12. Method according to any one of claims 1 to 11, **characterized in that** the polymer dispersion has a salt content of less than 15 wt.%, more preferred a salt content of 0.1 to 10 wt.-%, most preferred 1 to 5 wt.-%, based on the total weight of the polymer dispersion.

13. A polymer dispersion comprising
a) a polymeric dispersant and
b) dispersed polymer derived from a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 120.000 g/mol;
and/or wherein the polymer dispersion has a bulk viscosity below 6.700 mPas, preferably below 6.000 mPas, more preferred below 5.500 mPas, most preferred below 5.000 mPas as measured at 20°C with a Brookfield viscometer with spindle 4 and speed 10 rpm.

14. A polymer dispersion obtained by a method for manufacturing the polymer dispersion according to any one of claims 1 to 12 comprising the steps of
A) providing a reaction mixture in an aqueous medium comprising
a) a polymeric dispersant and
b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
B) subjecting the monomer composition to a radical polymerization to synthesize a dispersed polymer and to form the polymer dispersion,
wherein step B) is performed under controlled adiabatic conditions.

15. Use of the polymer dispersion according to claim 13 or claim 14
a. as a flocculant in the sedimentation, flotation or filtration of solids,
b. as a thickener,
c. as a contaminant control,
d. as a dry strength aid, retention agent or drainage aid in papermaking.
